Europäisches Patentamt

European Patent Office

Office européen des brevets

(11) Veröffentlichungsnummer: **0 425 919 A1**

# EUROPÄISCHE PATENTANMELDUNG

(21) Anmeldenummer: 90120036.0

(51) Int. Cl.⁵: **B23P 11/00**

(22) Anmeldetag: 19.10.90

(30) Priorität: 02.11.89 DE 3936376

(43) Veröffentlichungstag der Anmeldung:
08.05.91 Patentblatt 91/19

(84) Benannte Vertragsstaaten:
DE ES FR GB IT SE

(71) Anmelder: AUDI AG
Postfach 2 20
W-8070 Ingolstadt(DE)

(72) Erfinder: Eggerstedt, Uwe
Rosenstrasse 6
W-8079 Walting(DE)
Erfinder: Uebelstädt, Manfred
Neubaustrasse 19
W-8071 Wettstetten(DE)

(74) Vertreter: Engelhardt, Harald
Audi AG Postfach 2 20
W-8070 Ingolstadt(DE)

(54) Vorrichtung zum Befestigen eines Gegenstandes.

(57) Zum Befestigen eines Gegenstandes (29) an einem Hohlkörper (1) wird vorgeschlagen, zwischen zwei einander gegenüberliegenden Wänden (7, 9) des Hohlkörpers (1) ein Distanzteil (11) anzuordnen. Das Distanzteil (11) wird vor dem Zusammenfügen der den Hohlkörper (1) bildenden Blechschalen (3, 5) an derjenigen Wand (9) befestigt, welche dem zu befestigenden Gegenstand (29) gegenüberliegt. An der Wand (5), an der der Gegenstand (29) anliegt, ist eine Aussparung (21) vorgesehen, durch die eine Schraube (23) hindurchgeführt und in eine Aufnahme (27) des Distanzteiles eingedreht ist. Das Distanzteil (11) stellt sicher, daß über den Gegenstand (29) eingeleitete Kräfte von beiden Wänden (7, 9) in den Hohlkörper (1) eingeleitet werden.

EP 0 425 919 A1

## VORRICHTUNG ZUM BEFESTIGEN EINES GEGENSTANDES

Die Erfindung beizieht sich auf eine Vorrichtung zum Befestigen eines Gegenstandes gemäß dem Oberbegriff des Patentanspruchs 1.

Aus der EP 0 055 398 ist ein durch zwei Blechschalen gebildeter Hohlkörper bekannt, welcher einen Querträger in einer Fahrzeugkarosserie bildet. Zur Erhöhung der Steifigkeit des Querträgers ist in diesem ein Versteifungsteil angeordnet. Das Versteifungsteil erstreckt sich zwischen zwei etwa einen rechten Winkel einschließenden Querwänden des Querträgers. Das Verstärkungsteil ist mit Flanschen versehen, über die es mit einer der beiden Wände verschweißt ist. An der anderen Wand liegt das Verstärkungsteil nur an bzw. verläuft in einem geringen Abstand zu dieser.

Der Erfindung liegt die Aufgabe zugrunde, mit einfachen Mitteln eine Vorrichtung zum Befestigen eines Gegenstandes an der Außenseite eines Hohlkörpers zu schaffen, welche eine gute Krafteinleitung in den Hohlkörper sicherstellt.

Die Aufgabe wird durch die kennzeichnenden Merkmale des Patentanspruchs 1 gelöst.

Dadurch, daß zwischen derjenigen Wand des Hohlkörpers, an der der zu befestigende Gegenstand anliegt und der gegenüberliegenden Wand ein an dieser befestigtes Distanzteil angeordnet ist, werden beide Wände des Hohlkörpers zur Befestigung des Gegenstandes herangezogen. Bei bekannten Anordnungen ist diejenige Wand, an der der zu befestigende Gegenstand anliegt, durch eine Platte verstärkt. Diese Platte stellt zwar sicher, daß die Wand örtlich nicht verformt wird. Letztendlich werden jedoch alle Kräfte nur auf diese eine Wand übertragen, welche deshalb entsprechend dimensioniert sein muß bzw. nur beschränkt Kräfte aufnehmen kann. Bei der vorgeschlagenen Anordnung wird jedoch die gesamte Festigkeit des Hohlkörpers genutzt und diese noch dadurch erhöht, daß das Distanzteil die einander gegenüberliegenden Wände verbindet.

Bei der neuen Lösung ist diejenige Wand, an der der zu befestigende Gegenstand anliegt mit einer Aussparung versehen, durch die ein Befestigungselement hindurchgeführt ist, welches in eine entsprechende Aufnahme in dem Distanzteil eingreift. Über das Befestigungelement erfolgt also nicht nur die Befestigung des Gegenstandes selbst; es wird vielmehr durch das Befestigungselement eine zweite Funktion ausgeübt, nämlich eine Verbindung zwischen den beiden Wänden des Hohlträgers geschaffen und dadurch die Festigkeit weiter erhöht. Es wäre natürlich denkbar, das Distanzteil an beiden Innenseiten der einander gegenüberliegenden Wänden unmittelbar zu befestigen. Diese Vorgehensweise ist jedoch aufwendig und läßt sich nicht bei allen Querschnitten realisieren. Anders hingegen bei der vorgeschlagenen Lösung, bei der vor dem Zusammenfügen der den Hohlkörper bildenden Bauteile das Distanzteil an einem der Bauteile befestigt wird. Dies läßt sich durch die vielfältigsten Maßnahmen, beispielsweise durch schweißung oder Kleben, erreichen. Erst wenn das Distanzteil befestigt ist, werden die Bauteile zusammengefügt, wobei die Aufnahme in dem Distanzteil mit der Aussparung in der gegenüberliegenden Wand fluchtet.

Das vorstehend genannte Fluchten zwischen der Aufnahme in dem Distanzteil und der Aussparung läßt sich oft nur mit großem Aufwand erreichen. In diesem Fall ist es von großem Vorteil, wenn die Aussparung gegenüber dem Schaftdurchmesser des durch die Aussparung hindurchgeführten Befestigungselements zur Ermöglichung eines Toleranzausgleichs vergrößert ausgebildet ist. Es spielt dann keine Rolle, wenn die Aufnahme in dem Distanzteil nicht genau mit der Aussparung fluchten sollte. Um dann unabhängig von der relativen Lage des Distanzteiles zu der Aussparung stets eine sichere Anlage des Distanzteiles an der Wand im Bereich der Aussparung sicherzustellen, kann das Distanzteil mit einem die Aussparung übergreifenden Bund versehen sein, welcher an der Innenseite der Wand anliegt.

Gemäß einer vorteilhaften Weiterbildung der Erfindung kann das Befestigungselement durch eine Schraube gebildet sein und dementsprechend das Distanzteil eine Gewindebohrung aufweisen. Aus fertigungstechnischen Gründen ist es zweckmäßig, die Gewindebohrung durchgehend auszuführen.

Das Distanzteil kann zweckmäßig aus Metall bestehen und einen Flansch aufweisen, über den es mit der Wand verschweißt wird.

Die vorgeschlagene Befestigung kann in Verbindung mit allen Hohlkörpern Verwendung finden, bei denen es darauf ankommt, größere Kräfte in einfacher Weise in den Hohlkörper einzuleiten und nicht nur auf eine Wand des Hohlkörpers zu übertragen. Ein solcher Hohlkörper könnte beispielsweise auch ein Querträger in einer Kraftfahrzeugkarosserie sein, an dem etwa ein Beschlag für einen Sicherheitsgurt oder ein Scharnier für eine umklappbare Rückenlehne befestigt wird.

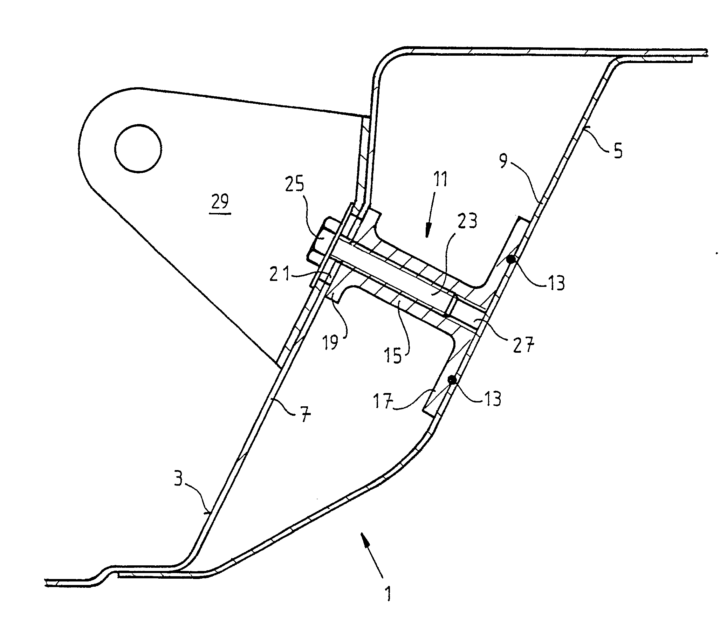

Ein Ausführungsbeispiel der Erfindung ist in der Zeichnung dargestellt und wird nachfolgend näher beschrieben.

Die Zeichnung zeigt einen Schnitt durch einen Hohlkörper 1, welcher durch Blechschalen 3 und 5 gebildet ist.

Die Blechschale 3 weist eine Wand 7 auf, welche etwa parallel zu einer Wand 9 der Blechschale 5 verläuft. Zwischen den beiden Wänden 7 und 9 erstreckt sich ein Distanzteil 11. Dieses wurde durch Schweißpunkte 13 an der Wand 9 der Blechschale 5 befestigt, bevor die beiden Blechschalen 3 und 5 zu dem Hohlkörper 1 verbunden wurden.

Das Distanzteil 11 besteht aus einem zylindrischen Mittelteil 15, einernflansch 17, über den es mit der Wand 9 verbunden ist, sowie einen Bund 19, mit dem es an der Wand 7 anliegt. Im Bereich der Anlage des Bundes 19 ist die Wand 7 mit einer Aussparung 21 versehen.

Wie die Zeichnung zeigt, ist durch die Aussparung 21 der Schaft 23 einer Schraube 25 hindurchgeführt. Zum Eindrehen der Schraube 25 in das Distanzteil 11 ist dieses mit einer entsprechenden Aufnahme 27, gebildet durch ein Innengewinde, versehen. Da die Aussparung 21 wesentlich größer als der Schaft 23 der Schraube 25 ausgeführt ist, kann die Schraube 25 selbst dann in das Distanzteil 11 eingedreht werden, wenn die Aufnahme 27 nicht genau mit der Aussparung 21 fluchtet.

Durch die in das Distanzteil 11 eingedrehte Schraube 25 werden nicht nur die beiden Wände 7 und 9 des Hohlkörpers 1 starr miteinander verbunden, sondern gleichzeitig auch der an der Wand 7 zu befestigende Gegenstand 29 gehalten. Die gezeigte Befestigung stellt sicher, daß auf den Gegenstand 29 ausgeübte Kräfte auf die Wand 7 und über das Distanzteil 11 auch auf die Wand 9 des Hohlkörpers 1 übertragen werden, so daß selbst durch relativ dünn ausgebildete Wände 7 und 9 größere Kräfte in den Hohlkörper 1 eingeleitet werden können.

**Ansprüche**

1. Vorrichtung zum Befestigen eines Gegenstandes an der Außenseite eines Hohlkörpers, dadurch gekennzeichnet, daß zwischen den Innenseiten von zwei einander gegenüberliegenden Wänden (7, 9) des Hohlkörpers (1) ein Distanzteil (11) angeordnet ist, daß diejenige Wand (7), an der der zu befestigende Gegenstand (29) anliegt, eine Aussparung (21) aufweist, daß durch die Aussparung (21) ein Befestigungselement hindurchgeführt ist und in eine entsprechende Aufnahme (27) in dem Distanzteil (11) eingreift, und daß das Distanzteil (11) an der der Aussparung (21) gegenüberliegenden Wand (9) befestigt ist.

2. Vorrichtung nach Anspruch 1, dadurch gekennzeichnet, daß die Aussparung (21) gegenüber dem Schaft (23) des durch die Aussparung (21) hindurchgeführten Befestigungselements zur Ermöglichung eines Toleranzausgleichs vergrößert ausgebildet ist, und daß das Distanzteil (11) mit einem die Aussparung (21) übergreifenden Bund (19) an der Innenseite der Wand (7) anliegt.

3. Vorrichtung nach Anspruch 1 oder 2, dadurch gekennzeichnet, daß das Befestigungselement durch eine Schraube (25) gebildet ist und das Distanzteil (11) eine durchgehende Gewindebohrung aufweist.

4. Vorrichtung nach einem der Ansprüche 1 bis 3, dadurch gekennzeichnet, daß das Distanzteil (11) aus Metall besteht und einen Flansch (17) aufweist, über den es mit der Wand (9) verschweißt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| Y | <u>FR - A - 1 235 478</u><br>(AERAZUR CONSTRUCTIONS AERONAUTIQUES)<br>　* Zusammenfassung; Ansprüche; fig. 3-8 *<br>　-- | 1,2,4 | B 23 P 11/00 |
| Y | <u>US - A - 4 022 099</u><br>(BALLANTYNE)<br>　* Spalte 5, Zeilen 35-46; fig. 5 * | 1,2,4 | |
| A | ---- | 3 | |

| RECHERCHIERTE SACHGEBIETE (Int Cl.5) |
|---|
| B 23 P 11/00 |
| B 23 P 19/00 |
| F 16 B 35/00 |
| F 16 B 37/00 |
| F 16 S  1/00 |
| F 16 S  3/00 |
| F 16 S  5/00 |
| B 62 D 25/00 |
| B 62 D 27/00 |

Der vorliegende Recherchenbericht wurde für alle Patentansprüche erstellt.

| Recherchenort<br>WIEN | Abschlußdatum der Recherche<br>10-01-1991 | Prüfer<br>BISTRICH |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82